# EUROPÄISCHE PATENTSCHRIFT

(11) **EP 1 491 976 B1**
(45) Veröffentlichungstag und Bekanntmachung des Hinweises auf die Patenterteilung: **25.08.2010**
(21) Anmeldenummer: 04013799.4
(22) Anmeldetag: 11.06.2004
(51) Int. Cl.: G05B 19/418

(54) **Datenerfassungs- und Verarbeitungssystem für die Kontrolle von Fertigungsprozessen**
Data capturing and processing system for controlling manufacturing processes
Système de saisie et traitement de données pour controller un procédé de fabrication

(30) Priorität: 25.06.2003 DE 10328758
(43) Veröffentlichungstag der Anmeldung: 29.12.2004
(73) Patentinhaber: M&F Maschinen- und Fertigungsanlagen-Optimierung Josef Nagel, 66453 Gersheim (DE)
(72) Erfinder: Nagel, Josef, 66453 Gersheim (DE)
(74) Vertreter: Bernhardt, Winfrid

(56) Entgegenhaltungen:
- EP-A- 0 403 735
- US-A- 5 691 906
- US-A1- 2003 125 906

## Beschreibung

Die Erfindung betrifft ein Datenerfassungs- und Verarbeitungssystem für die Kontrolle von Fertigungsprozessen, mit Einrichtungen zur Eingabe von Zustandsdaten, die Beeinträchtigungen des Fertigungsprozesses betreffen, und eine die Zustandsdaten verarbeitende Einrichtung zur automatischen Ermittlung des aufgrund der Zustandsdaten bis zu einem Zieltermin zu erwartenden Fertigungsausstoßes.

Prozesse industrieller Fertigung, die in einer Vielzahl von Stufen ablaufen können, unterliegen Störungen, welche den geplanten Fertigungsausstoß gefährden. Neben Organisationsfehlern kommen als Störfaktoren vor allem technische Defekte in Fertigungsanlagen aber auch Fehlleistungen in der Fertigung tätigenden Personals in Betracht. Je komplexer der Fertigungsprozess ist, umso schwerer lassen sich die Auswirkungen von Störungen auf ein längerfristig zu erreichendes Planziel überschauen.

Die EP 0 403 735 A1 beschreibt ein Ressourcen-Managementsystem zum Zuteilen von Fertigungsressourcen, die verschiedenen Beschränkungen unterliegen, um variierenden, von vielen Parametern abhängigen Fertigungsanforderungen zu genügen. Ein Datenerfassungs- und Verarbeitungssystem für die Kontrolle von Fertigungsprozessen der eingangs erwähnten Art geht aus der US 5,691,906 hervor. Dieses, dem Fertigungsmanagement dienende System ermittelt auf der Grundlage bekannter Leistungskenndaten der Fertigungsanlagen einer Produktionslinie den Einfluss von Ausfallzeiten der einzelnen Fertigungsanlagen der Produktionslinie auf den Fertigungsausstoß. Insbesondere wird berechnet, wie lange die einzelnen Fertigungsanlagen der Produktionslinie maximal ausfallen dürfen, wenn ein vorgegebener Zielproduktionsausstoß noch erreicht werden soll. Dieses System ist nicht unmittelbar in den Fertigungsprozess einbezogen, sondern liefert hauptsächlich Informationen, auf die sich das Management bei der Arbeitsorganisation stützen kann.

Der vorliegenden Erfindung liegt die Aufgabe zugrunde, ein Datenerfassungs- und Verarbeitungssystem für die Kontrolle von Fertigungsprozessen der eingangs erwähnten Art zu schaffen, das unmittelbar der Sicherung von Planzielen dient, die Fertigungsqualität fördert und unmittelbar im Fertigungsprozess Managementfunktionen automatisch ausführt.

Das diese Aufgabe lösende System nach der Erfindung ist dadurch gekennzeichnet, dass die Eingabeeinrichtungen vor Ort zur manuellen Dateneingabe durch das Fertigungspersonal oder/und zur automatischen Eingabe durch an den Fertigungsmitteln vorgesehene Sensoren installiert sind, und dass die Verarbeitungseinrichtung zur automatischen Ausgabe zur Behebung der Beeinträchtigungen zu treffender Maßnahmen und zur automatischen Terminierung der Maßnahmen aufgrund des Zieltermins und für den Zieltermin vorgegebener Stückzahlen vorgesehen ist.

Durch ein solches System lassen sich automatisch die Auswirkungen von Produktionsstörungen, sowie zu deren Behebung durchzuführender Maßnahmen einschließlich deren Terminierung ermitteln.

Bei den Zustandsdaten kann es sich z.B. um Daten handeln, welche Fehler an Fertigungsanlagen charakterisieren, z.B. Zeitpunkte von und Zeiträume zwischen Ausfall und Wiederinbetriebnahme solcher Anlagen. Als Zustandsdaten kommen ferner Ausschussquoten, Arbeitszeitaufwand für Nacharbeit und dergleichen in Betracht. Zweckmäßig stützt sich das Personal bei der Dateneingabe vor Ort auf eine Liste, in welcher definierte Störungen in Zuordnung zu einem Eingabecode aufgeführt sind.

In vorteilhafter Ausgestaltung der Erfindung umfasst die Verarbeitungseinrichtung eine Datenbank, welche zur Behebung von Beeinträchtigungen zu treffende Maßnahmen in Zuordnung zu Zustandsdaten oder zu Kombinationen von Zustandsdaten speichert. In dieser Datenbank können ferner Zustandsdaten in verdichteter Form gespeichert sein, z.B. Mittelwerte von Ausfallzeiten, die Aufschluss über die Verfügbarkeit von Fertigungseinrichtungen geben. Insbesondere sind gespeicherte Verfügbarkeitsdaten bei der automatischen Berechnung des zu erwartenden Produktionsausstoßes im Falle von Störungen heranzuziehen.

Bei der automatischen Anzeige zur Behebung von Beeinträchtigungen zu treffender Maßnahmen stützt sich die Verarbeitungseinrichtung z.B. auf die in der Datenbank in Zuordnung zu bestimmten Zustandsdaten gespeicherten Maßnahmen.

In der bevorzugten Ausführungsform der Erfindung umfasst die Verarbeitungseinrichtung ferner eine Einrichtung zur Kontrolle der Wirksamkeit getroffener Maßnahmen, wozu sie neu eingegebene Zustandsdaten analysiert. Die Verarbeitungseinrichtung kann überdies als lernfähiges System ausgebildet sein, das im Ergebnis der Kontrolle in der Datenbank neue Verknüpfungen zwischen zu treffenden Maßnahmen und Zustandsdaten schafft.

Das System kann ein Netzwerk verbundener Personalcomputer oder/und einen Computer mit mehreren Ein-/Ausgabeterminals umfassen. Neben Ein-/Ausgabemöglichkeiten in der Fertigung vor Ort ist zweckmäßig eine Ein-/Ausgabeeinrichtung für wenigstens eine Administrationsebene vorgesehen, wobei hier vor allem an einen Zugang zum System durch Personal der Produktionsplanung und -leitung zu denken ist.

Die Ein-/Ausgabeeinheiten für die Administrationsebene können durch Passwort geschützt sein, so dass keine Zugangsmöglichkeit für das Fertigungspersonal besteht.

Sämtliche Ein-/Ausgabeeinheiten lassen sich für die Anzeige von Zielvorgaben und Zielwerten nutzen. So kann auch das Fertigungspersonal stets über die zu erreichenden Produktionsziele informiert sein.

Die Erfindung soll nun anhand eines Ausführungsbeispiels und der beiliegenden, sich auf dieses Ausführungsbeispiel beziehenden Zeichnungen näher erläutert werden. Es zeigen:

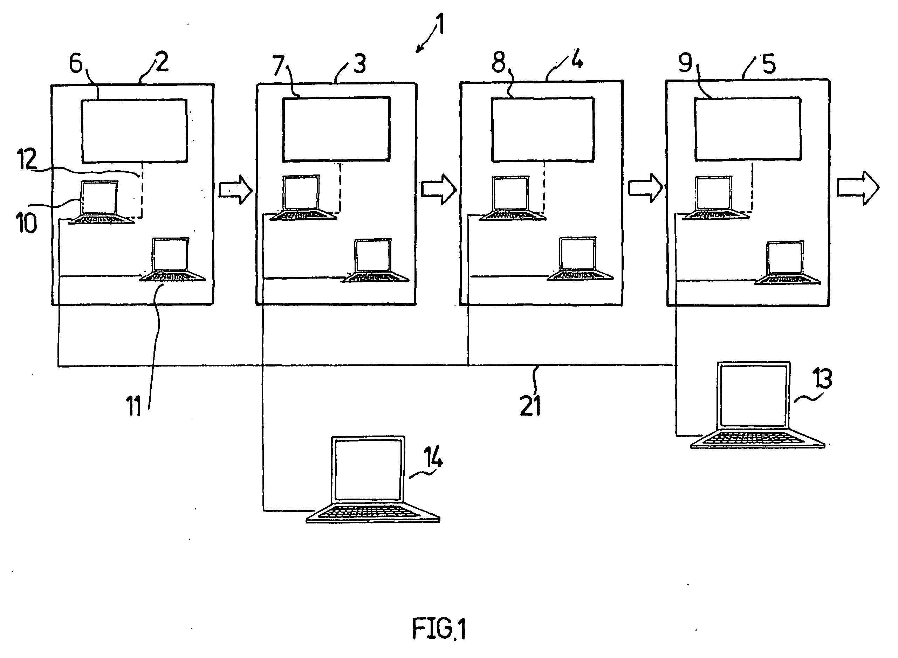

Fig. 1 eine schematische Darstellung eines Systems nach der Erfindung, und
Fig. 2 eine Detaildarstellung des Systems von Fig. 1.

Eine Fertigungslinie 1 ist in Fertigungsstufen 2 bis 5 unterteilt, von denen die Stufe 2 die Teilefertigung, die Stufe 3 die Vormontage, die Stufe 4 die Endmontage und die Stufe 5 die Qualitätsendkontrolle betrifft.

In jeder der Fertigungsstufen 2 bis 5 werden entsprechende, durch Blöcke 6 bis 9 symbolisierte Fertigungsmittel verwendet, wie z.B. Werkzeugsmaschinen, Montageroboter und Messeinrichtungen.

Jeder der Fertigungsstufen 2 bis 5 sind jeweils zwei Ein-/Ausgabeeinheiten 10 und 11 mit einem Bildschirm und einer Tastatur zugeordnet. Die Anzahl von Ein-/Ausgabeeinheiten ist beispielhaft und kann größer oder kleiner als die genannte Zahl sein. Die Ein-/Ausgabeeinheiten sind Bestandteil eines Computers, insbesondere eines Personalcomputers. Alternativ könnte es sich um an einen zentralen Computer angeschlossene Terminals handeln.

Die Ein-/Ausgabeeinheiten 10 sind jeweils für alle in der Fertigungslinie 1 beschäftigten Mitarbeiter zugänglich. Zugang zu den Ein-/Ausgabeeinheiten 11 haben für das Fertigungspersonal verantwortliche Vorgesetzte einschließlich Vorarbeiter, welche über entsprechende Passwörter verfügen.

Eine Strichlinie 12 deutet jeweils eine Verbindung zwischen den Fertigungsmitteln 6 bis 9 und der betreffenden Ein-/Ausgabeeinheit 10 an, über die durch Sensoren ermittelte Daten automatisch in die Einheit 10 eingebbar sind.

Die den Ein-/Ausgabeeinheiten 10 und 11 zugehörigen Computer sind über eine Leitung 12 zu einem Netzwerk zusammengeschlossen, welchem weitere Personalcomputer mit einer Ausgabeeinheit 13 bzw. 14 angehören.

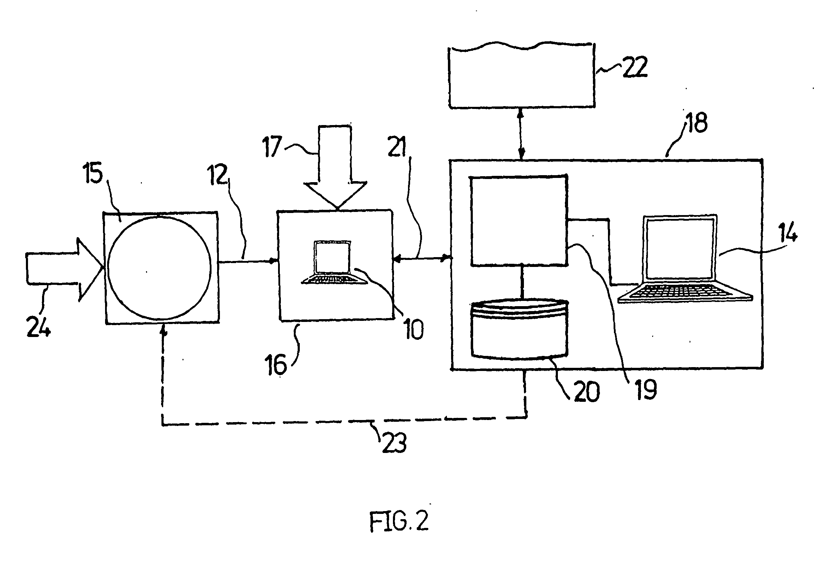

Gemäß Fig. 2 ist eine den Fertigungsmitteln 6 zugehörige Fertigungsmaschine 15 über die Leitung 12 mit einem die betreffende Ein-/Ausgabeeinheit 10 enthaltenden Personalcomputer 16 verbunden. Über die Leitung 12 werden in den Computer 16 automatisch die Fertigung durch die Maschine 15 betreffende, sensorisch ermittelte Daten eingegeben. Weitere Daten können über die Ein-/Ausgabeeinheit 10 gemäß Pfeil 17 manuell in den Personalcomputer 16 eingegeben werden. Der Personalcomputer 16 steht über die Leitung 21 in Verbindung mit einem die Ein-/Ausgabeeinheit 14 umfassenden Computer 18, welcher neben einer zentralen Verarbeitungseinheit 19 ein zur Speicherung von Daten einer Datenbank vorgesehenes Laufwerk 20 aufweist. Auf Daten des Laufwerks 20 können alle im Netzwerk zusammengeschlossenen Computer zugreifen. Der Computer 18 steht ferner in Verbindung mit einem Computer 22, der u.a. Aufgaben der Buchhaltung des Fertigungsbetriebes bearbeitet.

Im folgenden wird die Funktionsweise des vorangehend beschriebenen Systems erläutert.

Informationen über in den Fertigungsstufen 2 bis 5 auftretende Beeinträchtigungen des Fertigungsablaufs werden, soweit dies nicht über die jeweilige Leitung 12 automatisch erfolgt, in die betreffende Ein-/Ausgabeeinheit 10 bzw. den betreffenden Personalcomputer 16 gemäß Pfeil 17 durch das Fertigungspersonal manuell eingegeben. Dabei bedient sich das Personal einer standardisierten Fehlerliste, welche definierte Fehler in Zuordnung zu Eingabecodierungen enthält.

Die Fehler bzw. Störungsdaten betreffen u.a. organisatorische und technische Störungen, Nacharbeitsaufwand und Ausschussquoten.

Die Daten gelangen in den Computer 18, dessen Einheit 19 sie auf vielfältige Weise verarbeitet.

Unter anderem erfolgt eine Datenverdichtung und Speicherung von Daten in der genannten Datenbank, d.h. eine Datenspeicherung in dem für alle Computer des Systems zugänglichen Laufwerk 20.

Der Computer 18 führt ferner in Zeitabständen eine Pareto-Analyse durch.

In erster Linie erfolgt ein Soll/Ist-Vergleich, wobei die sich unter gegebenen Störungszuständen bis zu einem vorbestimmten Liefertermin erreichbare Stückzahl des in der Fertigungslinie 1 hergestellten Produkts mit der betreffenden Sollstückzahl verglichen wird.

Solche Sollstückzahlen werden die Ein-/Ausgabeeinheit 13 eingegeben, zu welcher die Planungsabteilung Zugang hat.

Aus dem Soll/Ist-Vergleich können Rückschlüsse auf die Dringlichkeit von Maßnahmen gezogen werden.

Die genannte Datenbank enthält in Zuordnung zu bestimmten Fehlern oder ganzen Störungsszenarien gespeicherte Maßnahmen. So können erforderliche Maßnahmen automatisch ermittelt und an gewünschten Ein-/Ausgabeeinheiten des Systems angezeigt werden. Ausgehend von den geplanten Stückzahlen kann sogar eine automatische Terminierung der Maßnahmen erfolgen und der Verantwortliche für die Durchführung benannt werden.

Die Anzeige von Maßnahmen erfolgt an den dem Fertigungspersonal und/oder den Vorarbeitern zugänglichen Ein-/Ausgabeeinheiten 10 bzw. 11. Natürlich kann je nach Organisationsform diese Information auch an der Einheit 14 angezeigt werden.

Solange die Maßnahmen nicht durchgeführt sind, bleiben sie in einer Liste offener Punkte an den Ein-/Ausgabeeinheiten anzeigbar.

Die Bestätigung des Abschlusses der Durchführung von Maßnahmen zur Störungsbehebung kann z.B. von den Vorarbeitern über die Ein-/Ausgabeeinheiten 11 eingegeben werden.

Der Computer 18 vergleicht die Wirksamkeit der Maßnahmen anhand der weiteren erhaltenen Daten, die z.B. einen Anstieg der Stückzahlen signalisieren.

Durch die Wirksamkeitsanalyse kann die Datenbank ständig vervollkommnet und damit die Wirksamkeit des Systems laufend erhöht werden.

## Patentansprüche

1. Datenerfassungs- und Verarbeitungssystem für die Kontrolle von Fertigungsprozessen, mit Einrichtungen (10) zur Eingabe von Zustandsdaten, die Beeinträchtigungen des Fertigungsprozesses betreffen, und einer die Zustandsdaten verarbeitenden Einrichtung (18) zur automatischen Ermittlung des aufgrund der Zustandsdaten bis zu einem Zieltermin zu erwartenden Fertigungsausstoßes,
**dadurch gekennzeichnet,**
**dass** die Eingabeeinrichtungen (10) vor Ort zur manuellen Dateneingabe durch das Fertigungspersonal oder/und zur automatischen Dateneingabe durch an Fertigungsmitteln (6) vorgesehene Sensoren installiert sind, und dass die Verarbeitungseinrichtung (18) zur automatischen Ausgabe zur Behebung der Beeinträchtigungen zu treffenden Maßnahmen und zur automatischen Terminierung der Maßnahmen aufgrund der Zieltermins und für den Zieltermin vorgegebener Fertigungsstückzahlen vorgesehen ist.

2. System nach Anspruch 1,
**dadurch gekennzeichnet,**
**dass** die Verarbeitungseinrichtung (18) ferner eine Datenbank umfasst, welche die zur Behebung von Beeinträchtigungen zu treffenden Maßnahmen in Zuordnung zu den Zustandsdaten enthält.

3. System nach Anspruch 1 oder 2,
**dadurch gekennzeichnet,**
**dass** die Verarbeitungseinrichtung (18) ferner zur Verdichtung der Zustandsdaten und Speicherung der verdichteten Zustandsdaten in einer Datenbank vorgesehen ist.

4. System nach einem der Ansprüche 1 bis 3,
**dadurch gekennzeichnet,**
**dass** die Verarbeitungseinrichtung (18) ferner eine Einrichtung zur Kontrolle der Wirksamkeit getroffener Behebungsmaßnahmen anhand veränderter Zustandsdaten umfasst.

5. System nach einem der Ansprüche 1 bis 4,
**dadurch gekennzeichnet,**
**dass** das System ein Netzwerk von Computern oder eine Vielzahl an einen Computer angeschlossene Ein-/Ausgobeterminals aufweist.

## Claims

1. Data capturing and processing system for controlling manufacturing processes, having devices (10) for inputting status data relating to impairments of the manufacturing process and a device (18) which processes the status data and is intended to automatically determine the manufacturing output to be expected up until a target date on the basis of the status data,
**characterized in that**
the input devices (10) are installed in situ for manual data input by the manufacturing personnel and/or for automatic data input by sensors provided on manufacturing means (6), and **in that** the processing device (18) is intended to automatically output measures to be taken in order to eliminate the impairments and to automatically terminate the measures on the basis of the target date and production quantities predefined for the target date.

2. System according to Claim 1,
**characterized in that**
the processing device (18) also comprises a database containing the measures to be taken in order to eliminate impairments, in association with the status data.

3. System according to Claim 1 or 2,
**characterized in that**
the processing device (18) is also intended to compress the status data and store the compressed status data in a database.

4. System according to one of Claims 1 to 3,
**characterized in that**
the processing device (18) also comprises a device for monitoring the effectiveness of eliminating measures taken on the basis of changed status data.

5. System according to one of Claims 1 to 4,
**characterized in that**
the system has a network of computers or a multiplicity of input/output terminals connected to a computer.

## Revendications

1. Système d'acquisition et de traitement de données pour le contrôle de procédés de fabrication, présentant des dispositifs (10) pour la saisie de données d'état, qui concernent des altérations du procédé de fabrication, et un dispositif (18) traitant les données d'état pour la détermination automatique sur base des données d'état du rendement de production escompté jusqu'à une date visée, **caractérisé**
**en ce que** les dispositifs de saisie (10) sont installés sur site pour la saisie manuelle des données par le personnel de fabrication et/ou pour la saisie automatique des données par des capteurs prévus sur les moyens de fabrication (6) et en ce que le dispositif de traitement (18) est prévu pour l'émission automatique de mesures à prendre en vue de réparer les altérations et pour mettre fin automatiquement aux mesures sur base de la date et du nombre de pièces fabriquées fixé pour la date.

2. Système selon la revendication 1, **caractérisé**
**en ce que** le dispositif de traitement (18) comprend en outre une base de données qui contient les mesures, affectées aux données d'état, à prendre pour réparer les altérations.

3. Système selon la revendication 1 ou 2, **caractérisé**
**en ce que** le dispositif de traitement (18) est en outre prévu pour compresser les données d'état et stocker les données d'état compressées dans une base de données.

4. Système selon l'une quelconque des revendications 1 à 3, **caractérisé en ce que** le dispositif de traitement (18) comprend en outre un dispositif pour le contrôle de l'efficacité des mesures de réparation prises à l'aide de données d'état modifiées.

5. Système selon l'une quelconque des revendications 1 à 4, **caractérisé en ce que** le système présente un réseau d'ordinateurs ou une multitude de terminaux de saisie/d'émission raccordés à un ordinateur.
